# EUROPEAN PATENT SPECIFICATION

(11) **EP 2 789 171 B1**
(45) Date of publication and mention of the grant of the patent: **23.10.2019**
(21) Application number: 11796669.7
(22) Date of filing: 08.12.2011
(51) Int. Cl.: H04W 4/00, H04W 56/00

(54) **NETWORK SYNCHRONISATION OF DEVICES IN A D2D CLUSTER**
NETZWERKSYNCHRONISIERUNG VON GERÄTEN IN EINEM D2D-CLUSTER
SYNCHRONISATION EN RÉSEAU POUR DES DISPOSITIFS DANS UNE GRAPPE D2D

(43) Date of publication of application: 15.10.2014
(73) Proprietor: Nokia Solutions and Networks Oy, 02610 Espoo (FI)
(72) Inventor: VAN PHAN, Vinh, FI-90100 Oulu (FI); HORNEMAN, Kari Veikko, FI-90800 Oulu (FI); YU, Ling, FI-90650 Oulu (FI)
(74) Representative: Browne, Robin Forsythe
(86) International application number: PCT/EP2011/072235
(87) International publication number: WO 2013/083197

(56) References cited:
- EP-A2- 2 161 960
- WO-A1-2007/110483
- WO-A1-2010/097645
- US-A1- 2005 239 451
- US-A1- 2007 254 656
- US-A1- 2011 268 006
- SHAO-YU LIEN ET AL: "Massive Access Management for QoS Guarantees in 3GPP Machine-to-Machine Communications", IEEE COMMUNICATIONS LETTERS, IEEE SERVICE CENTER, PISCATAWAY, NJ, US, vol. 15, no. 3, 1 March 2011 (2011-03-01), pages 311-313, XP011350716, ISSN: 1089-7798, DOI: 10.1109/LCOMM.2011.011811.101798

## Description

### Field

The invention relates to apparatuses, methods, systems, computer programs, computer program products and computer-readable media.

### Background

The following description of background art may include insights, discoveries, understandings or disclosures, or associations together with disclosures not known to the relevant art prior to the present invention but provided by the invention. Some such contributions of the invention may be specifically pointed out below, whereas other such contributions of the invention will be apparent from their context.

Support for machine type communication (MTC) or corresponding devices or services in general has attracted attention.

Machine type communication is also called machine-to- machine (M2M) communication, device-to-device communication, etc. Unlike human to human (H2H) communications which many communications networks are currently targeted to, M2M communication is seen as a means for data communication between entities that do not necessarily need human interaction.

WO 2007/110483 relates to concluding the validity of an uplink synchronization parameter, such as a timing advance, in a packet-switched radio system. The method includes: detecting (802) an uplink synchronization parameter; measuring (804) an interval from the detection of the uplink synchronization parameter; and comparing (806, 808) the measured interval with a predetermined threshold and, if the measured interval is shorter than the predetermined threshold, concluding (810) that the detected uplink synchronization parameter is still valid, or else concluding (812) that the detected uplink synchronization parameter is no more valid.

US 2005/239451 pertains to systems and methods for delivering both PMP communications, for example standard cellular communications via a base station, and also delivering P2P communications, for example, communications between two mobile stations, using the same spectral resources for both types of communication.

The article "Massive Access Management for QoS Guarantees in 3GPP Machine-to-Machine Communications", by SHAO-YU LIEN ET AL, IEEE COMMUNICATIONS LETTERS, IEEE SERVICE CENTER, PISCATAWAY, NJ, US, (20110301), vol. 15, no. 3, doi:10.1109/LCOMM.2011.011811.101798, ISSN 1089-7798, pages 311 - 313, XP011350716 [A] 1-48 * page 311 - column r, provides further background and context to the present invention.

WO 2010/097645 discloses a method that includes determining spatial locations of device pairs involved in device-to-device communications, and semi-persistently allocating radio resources to individual device pairs in accordance with time-hopped timeslot index sequences that are offset from one another so as to reduce an occurrence of interference with other device pairs.

US 2011/268006 relates to methods, apparatuses and systems that permit network allocation of uplink resources. In one example, a method includes determining uplink resources to be granted to a cluster. The method can also include preparing, at an apparatus, an uplink resource grant, based on the determining, including a transmitter identifier. The method can further include transmitting the uplink resources grant to a plurality of cluster nodes of the cluster. The transmitter identifier identifies at least one node of the plurality of cluster nodes.

### Brief description

According to an aspect of the present invention, there is provided a method in accordance with claim 1.

There is also disclosed an apparatus comprising: at least one processor and at least one memory including a computer program code, the at least one memory and the computer program code configured to, with the at least one processor, cause the apparatus at least to: obtain timing information parameters and statuses of validity timers of devices belonging to a device cluster and being in a network communication mode; monitor a need for uplink synchronization using the timing information parameters and/or the statuses, and if a need for network synchronization exists, control synchronization to a serving network node.

There is also disclosed an apparatus comprising: at least one processor and at least one memory including a computer program code, the at least one memory and the computer program code configured to, with the at least one processor, cause the apparatus at least to: convey timing information parameters and information on statuses of validity timers of devices belonging to a device cluster and being in a network communication mode for network synchronization purposes to a master device of a device cluster, and obtain at least one resource request for network synchronization from the master device of the device cluster on behalf of at least one device belonging to the device cluster and being in the network communication mode or in a network idle mode, and communicate with the master device of the device cluster for providing network synchronization.

There is also disclosed an apparatus comprising: at least one processor and at least one memory including a computer program code, the at least one memory and the computer program code con- figured to, with the at least one processor, cause the apparatus at least to: convey a timing information parameter and information on status of a validity timer to a master device of a device cluster when being in a network communication mode; request a resource for network communication from the master device of the device cluster, and obtain new timing information parameter and/or a validity timer, if needed for network synchronization for the network communication.

There is also disclosed an apparatus comprising: means for conveying a timing information parameter and information on status of a validity timer to a master device of a device cluster when being in a network communication mode; means for requesting a resource for network communication from the master device of the device cluster, and means for obtaining new timing information parameter and/or a validity timer, if needed for network synchronization for the network communication.

There is also disclosed a computer program embodied on a computer-readable storage medium, the computer program comprising program code for controlling a process to execute a process, the process comprising: obtaining timing information parameters and statuses of validity timers of devices belonging to a device cluster and being in a network communication mode; monitoring a need for uplink synchronization using the timing information parameters and/or the statuses, and if a need for network synchronization exists, controlling synchronization to a serving network node.

There is also disclosed a computer program embodied on a computer-readable storage medium, the computer program comprising program code for controlling a process to execute a process, the process comprising: conveying timing information parameters and information on statuses of validity timers of devices belonging to a device cluster and being in a network communication mode for network synchronization purposes to a master device of a device cluster, and obtaining at least one resource request for network synchronization from the master device of the device cluster on behalf of at least one device belonging to the device cluster and being in the network communication mode or in a network idle mode, and communicate with the master device of the device cluster for providing network synchronization.

There is also disclosed aa computer program embodied on a computer-readable storage medium, the computer program comprising program code for controlling a process to execute a process, the process comprising: conveying a timing information parameter and information on status of a validity timer to a master device of a device cluster when being in a network communication mode; requesting a resource for network communication from the master device of the device cluster, and obtaining new timing information parameter and/or a validity timer, if needed for network synchronization for the network communication.

### List of drawings

Some embodiments of the present invention are described below, by way of example only, with reference to the accompanying drawings, in which
Figures 1A and IB illustrate examples of systems;
Figure 2 is a flow chart;
Figure 3 is another flow chart;
Figure 4 is yet another flow chart;
Figure 5 illustrates examples of apparatuses,
Figure 6 illustrates other examples of apparatuses, and
Figure 7 illustrates yet other examples of apparatuses.

### Description of some embodiments

The following embodiments are only examples. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Embodiments are applicable to any user device, such as a user terminal, as well as to any network element, relay node, server, node, corresponding component, and/or to any communication system or any combination of different communication systems that support required functionalities. The communication system may be a wireless communication system or a communication system utilizing both fixed networks and wireless networks. The protocols used, the specifications of communication systems, apparatuses, such as servers and user terminals, especially in wireless communication, develop rapidly. Such development may require extra changes to an embodiment. Therefore, all words and expressions should be interpreted broadly and they are intended to illustrate, not to restrict, embodiments.

In the following, different exemplifying embodiments will be described using, as an example of an access architecture to which the embodiments may be applied, a radio access architecture based on long term evolution advanced (LTE Advanced, LTE-A), that is based on orthogonal frequency multiplexed access (OFDMA) in a downlink and a single-carrier frequency-division multiple access (SC-FDMA) in an uplink, without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS).

In an orthogonal frequency division multiplexing (OFDM) system, the available spectrum is divided into multiple orthogonal sub-carriers. In OFDM systems, the available bandwidth is divided into narrower sub-carriers and data is transmitted in parallel streams. Each OFDM symbol is a linear combination of signals on each of the subcarriers. Further, each OFDM symbol is preceded by a cyclic prefix (CP), which is used to decrease Inter-Symbol Interference. Unlike in OFDM, SC-FDMA subcarriers are not independently modulated.

Typically, a (e)NodeB ("e" stands for evolved) needs to know channel quality of each user device and/or the preferred precoding matrices (and/or other multiple input-multiple output (MIMO) specific feedback information, such as channel quantization) over the allocated sub-bands to schedule transmissions to user devices. Such required information is usually signalled to the (e)NodeB.

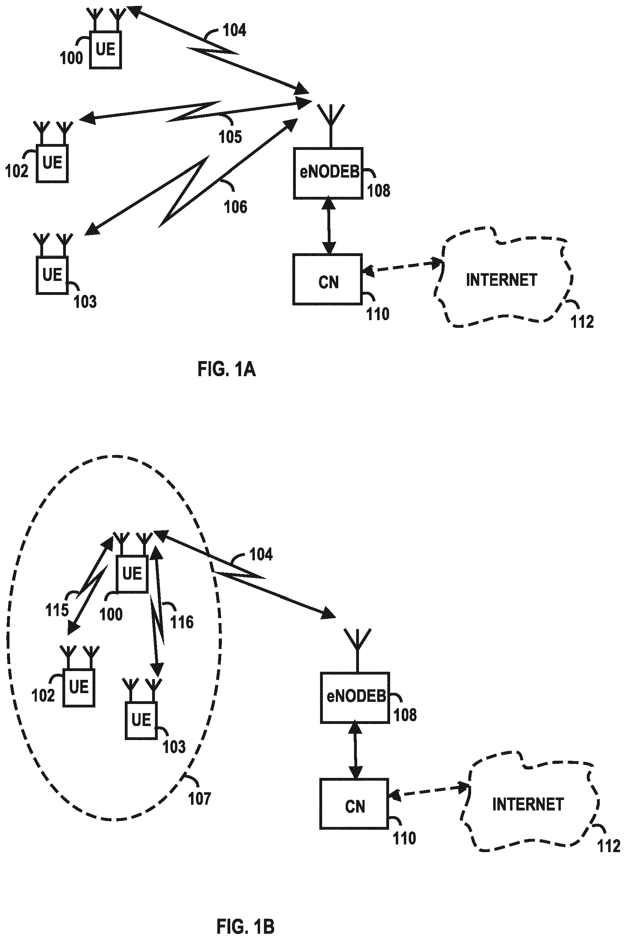

Figure 1A depicts examples of simplified system architectures only showing some elements and functional entities, all being logical units, whose implementation may differ from what is shown. The connections shown in Figure 1A are logical connections; the actual physical connections may be different. It is apparent to a person skilled in the art that the system typically comprises also other functions and structures than those shown in Figure 1A.
The embodiments are not, however, restricted to the system given as an example but a person skilled in the art may apply the solution to other communication systems provided with necessary properties.

Figure 1A shows a part of a radio access network based on E-UTRA, LTE, LTE-Advanced (LTE-A) or LTE/EPC (EPC = evolved packet core, EPC is enhancement of packet switched technology to cope with faster data rates and growth of Internet protocol traffic). E-UTRA is an air interface of Release 8 (UTRA= UMTS terrestrial radio access, UMTS= universal mobile telecommunications system). Some advantages obtainable by LTE (or E-UTRA) are a possibility to use plug and play devices, and Frequency Division Duplex (FDD) and Time Division Duplex (TDD) in the same platform.

Figure 1A shows user devices 100, 102 and 103 configured to be in a wireless connection on one or more communication channels 104, 105 and 106 in a cell with a (e)NodeB 108 providing the cell. The physical link from a user device to a (e)NodeB is called uplink or reverse link and the physical link from the NodeB to the user device is called downlink or forward link.

The NodeB, or advanced evolved node B (eNodeB, eNB) in LTE-Advanced, is a computing device configured to control the radio resources of communication system it is coupled to. The (e)NodeB may also be referred to as a base station, an access point or any other type of interfacing device including a relay station capable of operating in a wireless environment.

The (e)NodeB includes transceivers, for example. From the transceivers of the (e)NodeB, a connection is provided to an antenna unit that establishes bidirectional radio links to user devices. The antenna unit may comprise a plurality of antennas or antenna elements. The (e)NodeB is further connected to core network 110 (CN). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc.

A communications system typically comprises more than one (e)NodeB in which case the (e)NodeBs may also be configured to communicate with one another over links, wired or wireless, designed for the purpose. These links may be used for signalling purposes.
The communication system is also able to communicate with other networks, such as a public switched telephone network or the Internet 112. The communication network may also be able to support the usage of cloud services. It should be appreciated that (e)NodeBs or their functionalities may be implemented by using any node, host, server or access point etc. entity suitable for such a usage.

The user device (also called UE, user equipment, user terminal, terminal device, etc.) illustrates one type of an apparatus to which resources on the air interface are allocated and assigned, and thus any feature described herein with a user device may be implemented with a corresponding apparatus, such as a relay node. An example of such a relay node is a layer 3 relay (self-backhauling relay) towards the base station.
The user device typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device.

The user device (or in some embodiments a layer 3 relay node) is configured to perform one or more of user equipment functionalities. The user device may also be called a subscriber unit, mobile station, remote terminal, access terminal, user terminal or user equipment (UE) just to mention but a few names or apparatuses.

It should be understood that, in Figure 1A, user devices are depicted to include 2 antennas only for the sake of clarity. The number of reception and/or transmission antennas may naturally vary according to a current implementation.

Further, although the apparatuses have been depicted as single entities, different units, processors and/or memory units (not all shown in Figure 1A) may be implemented.

It is obvious for a person skilled in the art that the depicted system is only an example of a part of a radio access system and in practise, the system may comprise a plurality of (e)NodeBs, the user device may have an access to a plurality of radio cells and the system may comprise also other apparatuses, such as physical layer relay nodes or other network elements, etc. At least one of the NodeBs or eNodeBs may be a Home(e)nodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometres, or smaller cells such as micro-, femto- or picocells. The (e)NodeBs of Figure 1A may provide any kind of these cells. A cellular radio system may be implemented as a multilayer network including several kinds of cells. Typically, in multilayer networks, one node B provides one kind of a cell or cells, and thus a plurality of (e) Node Bs are required to provide such a network structure.

Recently for fulfilling the need for improving the deployment and performance of communication systems, the concept of "plug-and-play" (e)Node Bs has been introduced. Typically, a network which is able to use "plug-and-play" (e)Node (e)Bs, includes, in addition to Home (e)Node Bs (H(e)nodeBs), a home node B gateway, or HNB-GW (not shown in Figure 1A). A HNB Gateway (HNB-GW), which is typically installed within an operator's network may aggregate traffic from a large number of HNBs back to a core network through Iu-cs and Iu-ps interfaces.

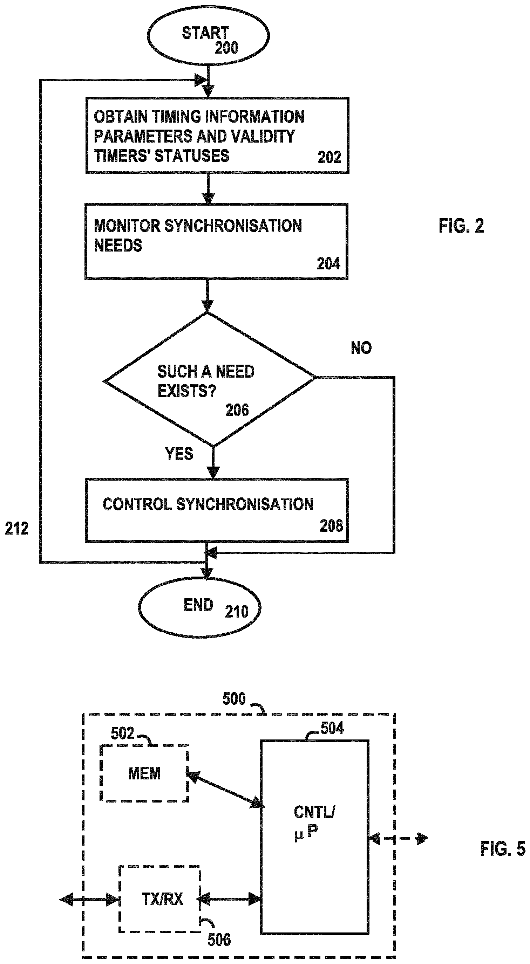

In the following, some embodiments are disclosed in further details in relation to Figures 2, 3 and 4. Some embodiments are especially suitable for uplink synchronisation for network communication of a D2D cluster. Term "network communication" means herein communication outside a D2D cluster that is communication with a "normal" serving communications network.

In Figure 1B which is based on the exemplary system shown in Figure 1A, devices 100, 102 and 103 make a cluster 107. Figure 1B is also presented herein for clarification purposes only and it should not be used to limit the implementation of embodiments. As an example of one possible variation it is put forward that not all the user devices in the area have to be in a D2D cluster or a plurality of clusters may be provided. In the Figure 1B, user device 100 is a master device or cluster head of the device cluster. In this example, other user devices 102 and 103 may communicate with the master device by using radio connections 115 and 116. They may also communicate directly with each other. It is also an option that the master device may be changed or it may authorize one or more devices to communicate with the node 108 on the behalf of the cluster. It is obvious that the composition of the cluster may change in the course of time, for example.

Machine type communication is also called machine-to-machine (M2M) communication, device-to-device (D2D) communication, etc. Unlike human to human (H2H) communications which many communications networks are currently targeted to, M2M communication is seen as a means for data communication between entities that do not necessarily need human interaction. Machine type communication is foreseen to typically have a large number of communicating devices as well as small and infrequent traffic transmission per each device. Typically, devices communicating under this scenario are so-called smart devices encompassing applications in variety of fields, such as healthcare, manufacturing, home appliances, security services and energy consumption (smart grid technology). Since MTC traffic is basically automated by the nature, it may generate very high simultaneous network loads, causing disturbances of higher value services or even network outages.

M2M or D2D communication may be controlled by a network. In the network-controlled D2D communications, user devices may have both cellular (at least some default signalling bearers for network control purposes) and D2D bearers configured, thus they may have a "mixed" configuration. The user devices may be configured to switch between communicating with a serving (e)NB in a regular cellular access mode (on a cellular radio bearer) and with each other in a D2D mode (on a D2D radio bearer) in a time-division or time-sharing fashion. Thus, D2D communication may be carried out while the user devices are in a discontinuous reception (DRX) mode of the serving cell. A discontinuous reception mode is provided to improve the battery life of a user device and is thus quite typically used in the LTE (-A) networks to provide a better user experience.

In the "mixed" configuration case described above, a network may utilize clusters in order to reduce signalling: an (e) node B may allocate resources for a cluster and the cluster head or a master device further allocates them to cluster members. It should be understood that acting as a cluster head may require node-like operation from a user device. Clusters may also be flexible and thus alter according to needs and/or time. User devices may enter and leave a cluster when they move from one coverage area to another, for example.

Usually, a need to maintain uplink (UL) synchronization for devices taking part in network-controlled D2D communications exists. Thus, control signalling between the (user) devices and the network (such as a serving eNB) needs consideration. For efficient control signalling, a quick access of the devices to the serving (e)NB as well as a minimum signalling overhead and complexity are typical key issues.

In the following, some parameters suitable for being used in embodiments as well as an example of a radio resource control (RRC) connected mode DRX are explained. It should be appreciated that examples disclosed herein do not limit the applicability of embodiments but are only presented for clarification purposes.

A radio resource control (RRC) connected mode discontinuous reception (DRX) for E-UTRAN is specified in 3GPP 36.331 (DRX configuration for RRC connected mode), 3GPP 36.321 (sections 3 and 5.7 for detailed functionality of the RRC connected mode DRX) and 3GPP 36.133 defining performance requirements for a user device applying DRX. DRX related parts of these standards are taken herein as a reference.

The DRX scheme has an option that a user device is configured with both a long DRX cycle and a short DRX cycle. The long DRX cycle is defined as an integer number of short DRX cycles to ensure the synchronisation between the user device and an (e)NB also when scheduling failures take place. While scheduled, the user device may apply the short DRX cycle for a given number of cycles. Every time the user device is scheduled, the applicability of the short DRX cycle will be extended by resetting a related counter. In the case no scheduling is carried out while the short DRX cycle has been applied, the user device starts to use the long DRX cycle.

The user device may also have a timing alignment timer (TAT). This timer is linked to the life-time of an uplink timing advance (TA) value. The timer is usually started or reset every time a user device receives a TA value from an (e)NB. Various uplink resources, such as a periodic channel quality indicator (CQI), sounding reference signal (SRS) or scheduling request (SR), may be allocated to the user device. These allocations are only valid as long as the user device has a valid TAT. If (or when) the TAT expires, the user device will release these resources. In this case two possibilities for traffic initiation are provided: a network initiation by use of a physical uplink control channel (PDCCH) order (ordering the user device to transmit radio access bursts on a random access channel (RACH)) or a user device initiation (random access burst transmission on RACH).

On the other hand, as long as the user device has a valid TAT it is likely that it has valid uplink resources available. Thus the (e)NB may have a communication contact with the user device via a physical downlink control channel (PDCCH) when the user device monitors that channel. The user device may thus request uplink resources from a network by using a scheduling request.

It should be appreciated that all of a devices in a network controlled D2D cluster do not need to be kept in an RRC connected state. Yet, devices which are either in an RRC idle state or DRX mode of the RRC connected state, but which do not have valid timing advance information (TAI), typically need to perform a RACH procedure to get synchronized to a serving (e)NB in the UL. However, TAI is often same for individual members of a network controlled D2D cluster as they tend to be in the close proximity of a D2D communications range or in a cluster area. Additionally, a D2D cluster may have a cluster-wise cell radio network temporary identifier (C-RNTI) assigned by a serving cell and used for group-wise or cluster-wise common control purposes. Besides, a D2D cluster may have a cluster head (CH) which overlooks local operation of the D2D cluster and guides individual devices thereof. Thus, control signalling overhead for both network side and user device side may be rationalised or controlled.

One embodiment may be carried out by a device configured to operate as a master device of a D2D cluster, such as a cluster head. The embodiment starts in block 200 of Figure 2.

In block 202, timing information parameters and statuses of validity timers of devices belonging to a device cluster and being in a network communication mode are obtained.

A master device of a device cluster may be kept updated of timing advance information (TAI) and/or timing alignment timer (TAT) of all individual devices of the D2D cluster under consideration. The updating may also comprise information on which devices are or remain in a radio resource control (RRC) connected state. Hence, TAI and cell radio network temporary identifier (C-RNTI) are examples of suitable timing information parameter and TAT is an example of a suitable validity timer. A radio resource control (RRC) connected state is an example of a network communication mode. The update may be conducted either by the serving network node, such as (e)NB, or by corresponding individual devices.

Moreover, a cluster-wise cell radio network temporary identifier (C-RNTI) may be assigned to a device cluster. Then a master device may also be kept updated about this value.

Thus, in an embodiment, a serving (e)NB and/or a master device of a D2D cluster may keep monitoring the status of uplink synchronization. Either the serving (e)NB or (user) devices in question may inform the master device on needed timing parameters. Therefore, the master device may need to operate with multiple TATs. In addition, the master device may also be kept updated on a discontinuous reception (DRX) configuration of devices of the D2D cluster. Thus, the master device is able to determine which members of the device cluster are in a network communication idle or in network communication mode, which device in the network communication mode (such as in a RRC connected state) have valid TATs and hence are ready for uplink transmission, whether an uplink (re-)synchronization is needed before transmission in the uplink for an individual need or on behalf of the D2D cluster, which devices had same TAIs in the past, and/or which TAIs already used by devices in the network communication mode may be valid for other devices in the network communication idle mode, etc. The network communication idle mode means that a device in this mode has no current communication with a serving "normal" communication network and a device in the network communication mode is in a state wherein it is able to communicate with the serving "normal" communication network. It should be understood that in the network communication idle mode, a device may still have on-going cluster communication.

In block 204, a need for uplink synchronization is monitored using the timing information parameters and/or the statuses.

In an embodiment, the need for uplink (re)synchronization of a device in a network communication mode (such as in a RRC connected state) may be based on determining whether the device has a valid timing information parameter (such as TAI) and/or whether its validity timer (such as TAT) is expired.

Another possibility is that a master device detects that a device of the cluster which is in a network communication idle mode is in need for network communication. This may take place for group or cluster communication, for example. Then a need for uplink synchronization exists.

As already presented above, the master device is able to determine which members of the device cluster are in a network communication idle or in network communication mode, which device in the network communication mode (such as in a RRC connected state) have valid TATs and hence are ready for uplink transmission (no synchronisation is required), whether an uplink (re-)synchronization is needed before transmission in the uplink for an individual need or on behalf of the D2D cluster, which devices have same TAIs in the past, and/or which TAIs already used by devices in the network communication mode may be valid for other devices in the network communication idle mode, etc.

If a need for network synchronization exists (block 206), synchronization to a serving network node is controlled (in block 208).

A master device of a cluster may request one or more dedicated random access channel (RACH) preambles to be used for quick (re)synchronization of a device in a network communication mode to a serving node ((e)NB) in the uplink, an RRC connection establishment for a device in a network communication idle mode for obtaining a RRC connection and getting access to the serving node ((e)NB) (thus bypassing a RACH procedure), or request or be assigned (by the serving eNB) one or more additional cluster-wise C-RNTIs. Each cluster-wise C-RNTI may have individual TAI and/or TAT (and/or other contexts including radio bearer, DRX configurations, etc.). Additionally, a device of the cluster which is in a network communication idle mode may also be instructed and configured by the master device to transmit and/or receive in communication connection with the serving (e)NB on behalf of the cluster.

As an option, upon predicting the need for uplink resynchronization (based on a DRX configuration, for example), a master device may request in advance a serving (e)NB to allocate one or more dedicated RACH preambles for devices in question to perform a non-contention RACH procedure to obtain quick uplink synchronization to the serving (e)NB.

A master device may obtain a service request from a device in a network communication idle mode. The communication need may be a call initiation, e-mail check, web browsing, etc. The master device may determine whether a cluster-wise valid TAI or valid TAI of another device may be applied to this device, request a serving (e)NB to establish an RRC connection and configure it with a valid TAI thus bypassing a regular RACH procedure, or carry out a regular RACH procedure.

As a D2D cluster usually comprises a number of individual devices and thus a need to establish and maintain more than one cluster-wise RRC connections or radio links between a serving node(s) and the D2D cluster for different networking purposes (control, management, different kinds of user traffic, possible distributed multi-point transmissions involving different members of the cluster, etc.) typically exists, a master device may request one or more additional cluster-wise C-RNTIs according to its needs. Each cluster-wise C-RNTI may have an individual TAI and/or TAT (as well as other contexts including radio bearers and DRX configurations).

It is also possible a D2D cluster to have many devices in a network communication idle mode to reduce network control overhead. A master device may select one or more of those devices and configure them over one or more D2D connections to transmit and/or receive in a communication connection with a serving (e)nodeB on behalf of the D2D cluster for cluster-wise networking purposes. In this case, cluster-wise C-RNTI, valid TAI and contexts thereof may be applied.

A node to which the synchronization is performed may be an (e)NodeB as in the exemplary examples presented above, or a corresponding node apparatus or operational unit, etc.

The embodiment ends in block 210. The embodiment is repeatable in many ways. One example is shown by arrow 212 in Figure 2.

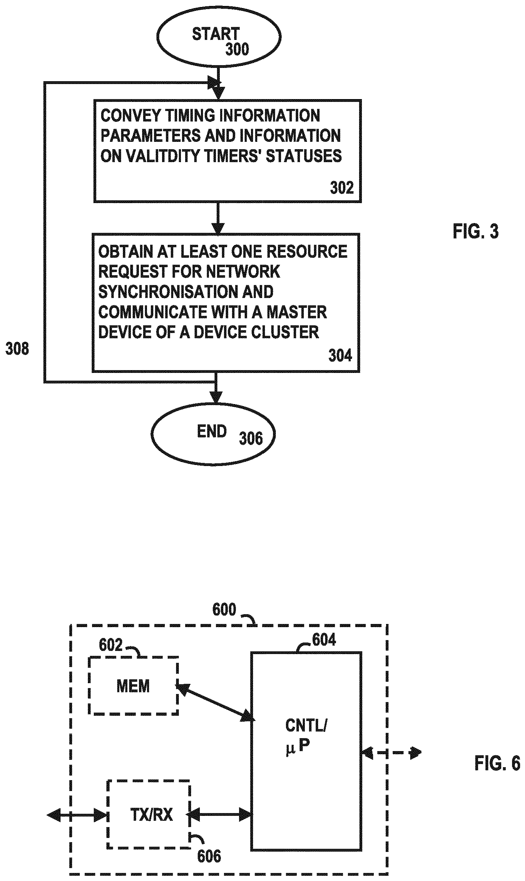

Another embodiment which may be carried out by a node, host or server will now be explained by means of Figure 3. The embodiment starts in block 300.

In block 302, timing information parameters and information on statuses of validity timers of devices belonging to a device cluster and being in a network communication mode are conveyed for network synchronization purposes to a master device of the device cluster.

A master device of a device cluster may be kept updated of timing advance information (TAI) and/or timing alignment timer (TAT) of all individual devices of the D2D cluster under consideration. The updating may also comprise information on which devices are or remain in a radio resource control (RRC) connected state. Hence, TAI and cell radio network temporary identifier (C-RNTI) are examples of suitable timing information parameter and TAT is an example of a suitable validity timer. A radio resource control connected state is an example of a network communication mode. The update may be conducted either by the serving node ((e)NB) or by corresponding individual devices.

Moreover, a group-wise or cluster-wise cell radio network temporary identifier (C-RNTI) may be assigned to a device cluster by a network. Then a node may keep a master device updated on this value as well.

Thus, in an embodiment, a serving node ((e)NB) and/or a master device of a D2D cluster may keep monitoring the status of uplink synchronization. Either the serving node or (user) devices in question may inform the master device on needed timing parameters. Therefore, the master device may need to operate with multiple TATs. In addition, the master device may also be kept updated on a discontinuous reception (DRX) configuration of individual devices of the D2D cluster. Thus, the master device is able to determine which members of the device cluster are in a network communication idle or in network communication mode, which device in the network communication mode (such as in a RRC connected state) have valid TATs and hence are ready for uplink transmission, whether an uplink (re-)synchronization is needed before transmission in the uplink for an individual need or on behalf of the D2D cluster, which devices had same TAIs in the past, and/or which TAIs already used by devices in the network communication mode may be valid for other devices in the network communication idle mode, etc. The network communication idle mode means that a device in this mode has no current communication with a serving "normal" communication network and a device in the network communication mode is in a state wherein it is able to communicate with the serving "normal" communication network.

In block 304, at least one resource request for network synchronization is obtained from the master device of the device cluster on behalf of at least one device belonging to the device cluster and being in the network communication mode or in a network idle mode and the master device of the device cluster for providing network synchronization is communicated with.

As already presented above, the master device is able to determine which members of the device cluster are in a network communication idle or in network communication mode, which device in the network communication mode (such as in a RRC connected state) have valid TATs and hence are ready for uplink transmission (no synchronisation is required), whether an uplink (re-)synchronization is needed before transmission in the uplink for an individual need or on behalf of the D2D cluster, which devices have same TAIs in the past, and/or which TAIs already used by devices in the network communication mode may be valid for other devices in the network communication idle mode, etc.

An node to which the synchronization is performed may be an (e)nodeB or a corresponding node apparatus or operational unit.

The node may obtain a request from a master device of a cluster for one or more dedicated random access channel (RACH) preambles to be used for quick (re)synchronization to a serving node in the uplink, an RRC connection establishment for a device in a network communication idle mode for obtaining a RRC connection and getting access to the node (thus bypassing a RACH procedure), or request or be assigned (by the node) one or more additional cluster-wise C-RNTIs. Each cluster-wise or group-wise C-RNTI may have individual TAI and/or TAT (and/or other contexts including radio bearer, DRX configurations, etc.).

As an option, upon predicting the need for uplink resynchronization (based on a DRX configuration, for example), a master device may request in advance a node (serving (e)NB) to allocate one or more dedicated RACH preambles for one or more devices in question to perform a non-contention RACH procedure to obtain quick uplink synchronization to the node.

A master device may obtain a service request from a device in a network communication idle mode. The communication need may be a call initiation, e-mail check, web browsing, etc. The master device may determine whether a cluster-wise valid TAI or valid TAI of another device may be applied to this device, request a node to establish an RRC connection and configure it with a valid TAI thus bypassing a regular RACH procedure, or carry out a regular RACH procedure with the node.

As a D2D cluster usually comprises a number of individual devices and thus a need to establish and maintain more than one cluster-wise RRC connections or radio links between a serving nodes and the D2D cluster for different networking purposes (control, management, different kinds of user traffic, possible distributed multi-point transmissions involving different members of the cluster, etc.) typically exists, a node may assign one or more additional cluster-wise C-RNTIs to the D2D cluster. Each cluster-wise C-RNTI may have an individual TAI and/or TAT (as well as other contexts including radio bearers and DRX configurations) .

It is also possible a D2D cluster to have many devices in a network communication idle mode to reduce network control overhead. A master device may select one or more of those devices and configure them over one or more D2D connections to transmit and/or receive in a communication connection with a node on behalf of the D2D cluster for cluster-wise networking purposes.

The embodiment ends in block 306. The embodiment is repeatable in many ways. One example is shown by arrow 308 in Figure 3.

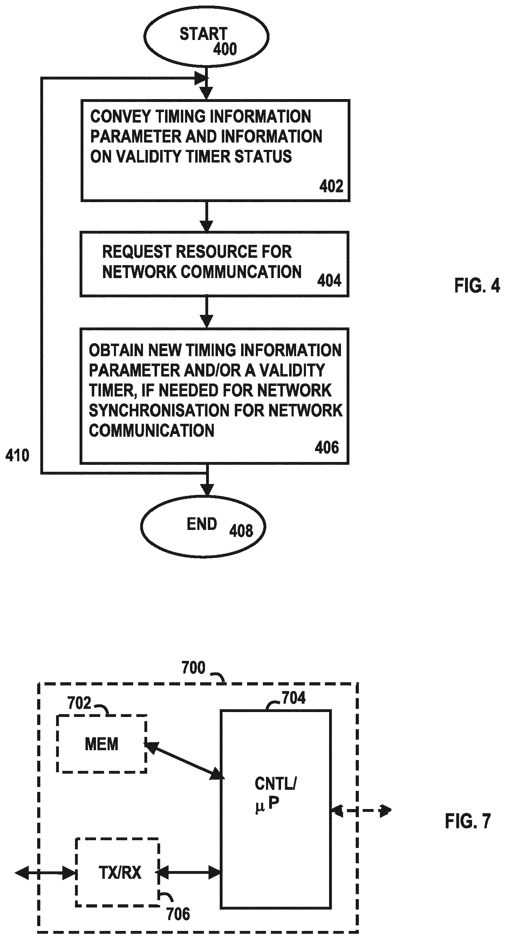

Another embodiment which may be carried out by a user device will now be explained by means of Figure 4. The embodiment starts in block 400.

In block 402, timing information parameter and information on status of a validity timer is conveyed to a master device of a device cluster when being in a network communication mode.

A master device of a device cluster may be kept updated of timing advance information (TAI) and/or timing alignment timer (TAT) of all individual devices of the D2D cluster under consideration. The updating may also comprise information on which devices are or remain in a radio resource control (RRC) connected state. Hence, TAI and cell radio network temporary identifier (C-RNTI) are examples of suitable timing information parameter and TAT is an example of a suitable validity timer. A radio resource control connected state is an example of a network communication mode. The update may be conducted either by the serving (e)NB or by corresponding individual devices, typically user devices.

Thus, in an embodiment, a serving (e)NB and/or a master device of a D2D cluster may keep monitoring the status of uplink synchronization. Either the serving (e)NB or user devices in question may inform the master device on needed timing parameters. Therefore, the master device may need to operate with multiple TATs. In addition, the master device may also be kept updated on a discontinuous reception (DRX) configuration of individual devices of the D2D cluster. This information may also be conveyed to the master device by one or more user devices. Thus, the master device is able to determine which members of the device cluster are in a network communication idle or in network communication mode, which device in the network communication mode (such as in a RRC connected state) have valid TATs and hence are ready for uplink transmission, whether an uplink (re-)synchronization is needed before transmission in the uplink for an individual need or on behalf of the D2D cluster, which devices had same TAIs in the past, and/or which TAIs already used by devices in the network communication mode may be valid for other devices in the network communication idle mode, etc. The network communication idle mode means that a device in this mode has no current communication with a serving "normal" communication network and a device in the network communication mode is in a state wherein it is able to communicate with the serving "normal" communication network.

In block 404, a resource for network communication is requested from the master device of the device cluster.

A (user) device in a network communication idle mode may request a service from a network via a master device. The communication need may be a call initiation, e-mail check, web browsing, etc. The master device may determine whether a cluster-wise valid TAI or valid TAI of another (user) device may be applied to (user) device in question, request a serving (e)NB to establish an RRC connection and configure it with a valid TAI thus bypassing a regular RACH procedure, or carry out a regular RACH procedure.

In the case a user device is in a network communication mode, a user device may request resources from a master device in a usual manner used in D2D clusters.

It is also possible a D2D cluster to have many (user) devices in a network communication idle mode to reduce network control overhead. A master device may select one or more of those (user) devices and configure them over one or more D2D connections to transmit and/or receive in a communication connection with a serving (e)NB on behalf of the D2D cluster for cluster-wise networking purposes.

In block 406, new timing information parameter and/or a validity timer is obtained, if needed for network synchronization for the network communication.

Examples of timing information parameter and/or validity information timer are TAI, TAT and/or C-RNTI. New timing information parameter and/or validity information timer are needed in the case they are lacking or are expired. A master device may convey TAI, TAT, C-RNTI to a user device for being used in network communication as new timing information parameter and/or a validity timer.

A master device of a cluster may request one or more dedicated random access channel (RACH) preambles to be used for quick (re)synchronization of a (user) device to the serving (e)NB in the uplink, an RRC connection establishment for a (user) device in a network communication idle mode for obtaining a RRC connection and getting access to the serving (e)NB (thus bypassing a RACH procedure), or request or be assigned (by the serving eNB) one or more additional cluster-wise C-RNTIs. Each cluster-wise C-RNTI may have individual TAI and/or TAT (and/or other contexts including radio bearer, DRX configurations, etc.). Additionally, a (user) device of the cluster which is in a network communication idle mode may also be instructed and configured by the master device to transmit and/or receive in communication connection with the serving (e)NB on behalf of the cluster.

As an option, upon predicting the need for uplink resynchronization (based on a DRX configuration, for example), a master device may request in advance a serving node ((e)NB) to allocate one or more dedicated RACH preambles for (user) devices in question to perform a non-contention RACH procedure to obtain quick uplink synchronization to the serving (e)NB.

The steps/points, signaling messages and related functions described above in Figures 2, 3 and 4 are in no absolute chronological order, and some of the steps/points may be performed simultaneously or in an order differing from the given one. Other functions may also be executed between the steps/points or within the steps/points and other signaling messages sent between the illustrated messages. Some of the steps/points or part of the steps/points can also be left out or replaced by a corresponding step/point or part of the step/point.

It should be understood that conveying, transmitting and/or receiving may herein mean preparing a data conveyance, transmission and/or reception, preparing a message to be conveyed, transmitted and/or received, or physical transmission and/or reception itself, etc. on a case by case basis. The same principle may be applied to terms transmission and reception as well.

An embodiment provides an apparatus which may be any user device or relay node suitable for operating as a master device of a device cluster or any other suitable apparatus capable to carry out processes described above in relation to Figure 2.

Figure 5 illustrates a simplified block diagram of an apparatus according to an embodiment.

As an example of an apparatus according to an embodiment, it is shown apparatus 500, such as user device or web stick, including facilities in control unit 504 (including one or more processors, for example) to carry out functions of embodiments according to Figure 2. The facilities may be software, hardware or combinations thereof as described in further detail below.

In Figure 5, block 506 includes parts/units/modules needed for reception and transmission, usually called a radio front end, RF-parts, radio parts, radio head, etc.

Another example of apparatus 500 may include at least one processor 504 and at least one memory 502 including a computer program code, the at least one memory and the computer program code configured to, with the at least one processor, cause the apparatus at least to: obtain timing information parameters and statuses of validity timers of devices belonging to a device cluster and being in a network communication mode, monitor a need for uplink synchronization using the timing information parameters and/or the statuses, and if a need for network synchronization exists, control synchronization to a serving network node.

Yet another example of an apparatus comprises means 504 (506) for obtain timing information parameters and statuses of validity timers of devices belonging to a device cluster and being in a network communication mode, means 504 (506) for monitoring a need for uplink synchronization using the timing information parameters and/or the statuses, and means for control synchronization to a serving network node, if a need for network synchronization exists,

Yet another example of an apparatus comprises an information unit configured to obtain timing information parameters and statuses of validity timers of devices belonging to a device cluster and being in a network communication mode, a monitoring unit configured to monitor a need for uplink synchronization using the timing information parameters and/or the statuses, and a controller configured to control synchronization to a serving network node, if a need for network synchronization exists.

It should be understood that the apparatuses may include or be coupled to other units or modules etc, such as radio parts or radio heads, used in or for transmission and/or reception. This is depicted in Figure 5 as optional block 506.

Although the apparatuses have been depicted as one entity in Figure 5, different modules and memory may be implemented in one or more physical or logical entities.

An embodiment provides an apparatus which may be any node, host, server, web stick or any other suitable apparatus capable to carry out processes described above in relation to Figure 3.

Figure 6 illustrates a simplified block diagram of an apparatus according to an embodiment.

As an example of an apparatus according to an embodiment, it is shown apparatus 600, such as user device or web stick, including facilities in control unit 604 (including one or more processors, for example) to carry out functions of embodiments according to Figure 3. The facilities may be software, hardware or combinations thereof as described in further detail below.

In Figure 6, block 606 includes parts/units/modules needed for reception and transmission, usually called a radio front end, RF-parts, radio parts, radio head, etc.

Another example of apparatus 600 may include at least one processor 604 and at least one memory 602 including a computer program code, the at least one memory and the computer program code configured to, with the at least one processor, cause the apparatus at least to: convey timing information parameters and information on statuses of validity timers of devices belonging to a device cluster and being in a network communication mode for network synchronization purposes to a master device of a device cluster, and obtain at least one resource request for network synchronization from the master device of the device cluster on behalf of at least one device belonging to the device cluster and being in the network communication mode or in a network idle mode, and communicate with the master device of the device cluster for providing network synchronization.

Yet another example of an apparatus comprises means 604 (606) for conveying timing information parameters and information on statuses of validity timers of devices belonging to a device cluster and being in a network communication mode for network synchronization purposes to a master device of a device cluster, and means 604 (606) for obtaining at least one resource request for network synchronization from the master device of the device cluster on behalf of at least one device belonging to the device cluster and being in the network communication mode or in a network idle mode, and communicate with the master device of the device cluster for providing network synchronization.

Yet another example of an apparatus comprises a conveying unit configured to convey timing information parameters and information on statuses of validity timers of devices belonging to a device cluster and being in a network communication mode for network synchronization purposes to a master device of a device cluster, and an obtaining unit configured to obtain at least one resource request for network synchronization from the master device of the device cluster on behalf of at least one device belonging to the device cluster and being in the network communication mode or in a network idle mode, and communicate with the master device of the device cluster for providing network synchronization.

It should be understood that the apparatuses may include or be coupled to other units or modules etc, such as radio parts or radio heads, used in or for transmission and/or reception. This is depicted in Figure 6 as optional block 606.

Although the apparatuses have been depicted as one entity in Figure 6, different modules and memory may be implemented in one or more physical or logical entities.

An embodiment provides an apparatus which may be any user device, web stick, or any other suitable apparatus capable to carry out processes described above in relation to Figure 4.

Figure 7 illustrates a simplified block diagram of an apparatus according to an embodiment.

As an example of an apparatus according to an embodiment, it is shown apparatus 700, such as user device or web stick, including facilities in control unit 704 (including one or more processors, for example) to carry out functions of embodiments according to Figure 4. The facilities may be software, hardware or combinations thereof as described in further detail below.

In Figure 7, block 706 includes parts/units/modules needed for reception and transmission, usually called a radio front end, RF-parts, radio parts, radio head, etc.

Another example of apparatus 700 may include at least one processor 704 and at least one memory 702 including a computer program code, the at least one memory and the computer program code configured to, with the at least one processor, cause the apparatus at least to: convey a timing information parameter and information on status of a validity timer to a master device of a device cluster when being in a network communication mode, request a resource for network communication from the master device of the device cluster, and obtain new timing information parameter and/or a validity timer, if needed for network synchronization for the network communication.

Yet another example of an apparatus comprises means 704 (706) for conveying a timing information parameter and information on status of a validity timer to a master device of a device cluster when being in a network communication mode, means 704 (706) for requesting a resource for network communication from the master device of the device cluster, and means 704 (706) for obtaining new timing information parameter and/or a validity timer, if needed for network synchronization for the network communication.

Yet another example of an apparatus comprises a conveying unit configured to convey a timing information parameter and information on status of a validity timer to a master device of a device cluster when being in a network communication mode, a requester configured to request a resource for network communication from the master device of the device cluster, and
an obtainer configured to obtain new timing information parameter and/or a validity timer, if needed for network synchronization for the network communication.

It should be understood that the apparatuses may include or be coupled to other units or modules etc, such as radio parts or radio heads, used in or for transmission and/or reception. This is depicted in Figure 7 as optional block 706.

Although the apparatuses have been depicted as one entity in Figure 7, different modules and memory may be implemented in one or more physical or logical entities.

An apparatus may in general include at least one processor, controller or a unit designed for carrying out control functions operably coupled to at least one memory unit and to various interfaces. Further, the memory units may include volatile and/or non-volatile memory. The memory unit may store computer program code and/or operating systems, information, data, content or the like for the processor to perform operations according to embodiments. Each of the memory units may be a random access memory, hard drive, etc. The memory units may be at least partly removable and/or detachably operationally coupled to the apparatus. The memory may be of any type suitable for the current technical environment and it may be implemented using any suitable data storage technology, such as semiconductor-based technology, flash memory, magnetic and/or optical memory devices. The memory may be fixed or removable.

The apparatus may be at least one software application, module, or unit configured as arithmetic operation, or as a program (including an added or updated software routine), executed by at least one operation processor. Programs, also called program products or computer programs, including software routines, applets and macros, may be stored in any apparatus-readable data storage medium and they include program instructions to perform particular tasks. Computer programs may be coded by a programming language, which may be a high-level programming language, such as objective-C, C, C++, C#, Java, etc., or a low-level programming language, such as a machine language, or an assembler.

Modifications and configurations required for implementing functionality of an embodiment may be performed as routines, which may be implemented as added or updated software routines, application circuits (ASIC) and/or programmable circuits. Further, software routines may be downloaded into an apparatus. The apparatus, such as a node device, or a corresponding component, may be configured as a computer or a microprocessor, such as single-chip computer element, or as a chipset, including at least a memory for providing storage capacity used for arithmetic operation and an operation processor for executing the arithmetic operation.

Embodiments provide computer programs embodied on a distribution medium, comprising program instructions which, when loaded into electronic apparatuses, constitute the apparatuses as explained above. The distribution medium may be a non-transitory medium.

Other embodiments provide computer programs embodied on a computer readable storage medium, configured to control a processor to perform embodiments of the methods described above. The computer readable storage medium may be a non-transitory medium.

The computer program may be in source code form, object code form, or in some intermediate form, and it may be stored in some sort of carrier, distribution medium, or computer readable medium, which may be any entity or device capable of carrying the program. Such carriers in-elude a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

The techniques described herein may be implemented by various means. For example, these techniques may be implemented in hardware (one or more devices), firmware (one or more devices), software (one or more modules), or combinations thereof. For a hardware implementation, the apparatus may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, digitally enhanced circuits, other electronic units designed to perform the functions described herein, or a combination thereof. For firmware or software, the implementation may be carried out through modules of at least one chip set (e.g., procedures, functions, and so on) that perform the functions described herein. The software codes may be stored in a memory unit and executed by processors. The memory unit may be implemented within the processor or externally to the processor. In the latter case it may be communicatively coupled to the processor via various means, as is known in the art. Additionally, the components of systems described herein may be rearranged and/or complimented by additional components in order to facilitate achieving the various aspects, etc., described with regard thereto, and they are not limited to the precise configurations set forth in the given figures, as will be appreciated by one skilled in the art.

It will be obvious to a person skilled in the art that, as technology advances, the inventive concept may be implemented in various ways. The invention and its embodiments are not limited to the examples described above but may vary within the scope of the claims.

## Claims

1. A method comprising:
at a master device (100) of a device-to-device cluster (107), obtaining (202) timing information parameters and statuses of validity timers of devices (102, 103) belonging to the device-to-device cluster and, for network synchronization purposes, being in a network communication mode with a serving network node (108);
monitoring (204) a need for uplink synchronization using the timing information parameters and/or the statuses, wherein monitoring requires monitoring of members of the devices of the device cluster by the master device, and
if a need for network synchronization exists (206), having the master device control synchronization (208) of cluster members needing renewal of network synchronization to the serving network node,
wherein:
the timing information parameters are timing advance information values "TAIs" and/or cell radio network temporary identifiers "C-RNTIs",
validity timers are timing alignment timers "TATs" and the TATs are linked to the lifetime of an uplink timing advance "TA" value, and
the network communication mode is a radio resource control "RRC" connected state; and wherein
the need for uplink synchronization of a device in the network communication mode is determined by determining whether the device has a valid timing information parameter and/or whether the validity timer is expired.

2. The method of claim 1, further comprising:
obtaining a cluster-wise cell radio network temporary identifier "C-RNTI" for the device cluster.

3. The method of any preceding claim 1 to 2, further comprising:
obtaining a discontinuous reception "DRX" configuration of devices belonging to the device cluster.

4. The method of any preceding claim 1 to 3, wherein the need for uplink synchronization of a device in a network communication idle mode is carried out by detecting a need for network communication.

5. The method of any preceding claim 1 to 4, wherein the control of synchronization to a serving network node is carried out by requesting at least one dedicated random access channel "RACH" preamble for a device in the network communication mode or a radio resource control connection establishment for a device in a network communication idle mode, and/or requesting or obtaining at least one additional cluster-wise cell radio network temporary identifier "C-RNTI".

6. The method of claim 1, further comprising:
assigning at least one cluster-wise cell radio network temporary identifier (C-RNTI) to the device cluster.

7. The method of claim 6, wherein each cluster-wise cell radio network temporary identifier has an individual timing advance information and/or timing alignment timer.

8. The method according to any preceding claim, further comprising:
requesting a resource for network communication from the master device of the device cluster, and
obtaining new timing information parameter and/or a validity timer, if needed for network synchronization for the network communication.

9. The method of claim 8, further comprising:
carrying out a non-contention random access channel process by using at least one dedicated random access channel preamble.

10. A master device of a device-to-device cluster being in network communication mode with a serving network node, the master device comprising an apparatus comprising means configured to carry out the method according to any one of claims 1 to 9.

11. A computer program product comprising program instructions configuring
a master device of a device-to-device cluster to perform any of the steps of the method as claimed in any one of claims 1 to 9 when the computer program is run.

## Patentansprüche

1. Verfahren, an einem Master-Gerät (100) eines Gerät-zu-Gerät Clusters (107), umfassend:
- Erhalten (202) von Laufzeit-Informations-Parametern und Statusangaben der Validitäts-Timer von Geräten (102, 103), welche zum Gerät-zu-Gerät Cluster gehören und,
welche sich, zum Zweck der Netzwerk-Synchronisation mit einem Serving-Network-Node (108), in einem Netzwerk-Kommunikations-Modus befinden;
- Überwachen (204) einer Nachfrage zur Uplink-Synchronisation unter Verwendung der Laufzeit-Informations-Parameter und/oder der Statusangaben, wobei das Überwachen ein Monitoring von Membern der Geräte des Geräte-Clusters durch das Master-Gerät erfordert, und
falls eine Nachfrage zur Netzwerk-Synchronisation besteht (206),
- Veranlassen des Master-Geräts zur Regelung der Synchronisation (208) von Cluster-Membern, welche eine Erneuerung der Netzwerk-Synchronisation mit dem Serving-Network-Node benötigen,
wobei:
die Laufzeit-Informations-Parameter Timing-Advance-Informations-Werte "TAIs" und/oder temporäre Funknetz-Zellen-Identifikatoren "C-RNTIs" sind,
die Validitäts-Timer Laufzeit-Abgleichs-Timer "TATs" sind und die TATs mit der Laufzeit eines Uplink-Timing-Advance "TA" -Wertes verknüpft sind, und
der Netzwerk-Kommunikations-Modus ein Radio-Resource-Control "RRC" - Verbindungszustand ist; und wobei
die Nachfrage einer Uplink-Synchronisation eines Geräts im Netzwerk-Kommunikations-Modus bestimmt wird durch Feststellen ob das Gerät einen gültigen Laufzeit-Informations-Parameter aufweist und/oder ob der Validitäts-Timer abgelaufen ist.

2. Verfahren nach Anspruch 1, weiter umfassend:
- Erhalten eines clusterweisen temporären Funknetz-Zellen-Identifikators "C-RNTI" für den Geräte-Cluster.

3. Verfahren nach einem der vorgehenden Ansprüche 1 bis 2, weiter umfassend:
- Erhalten einer diskontinuierlichen Empfangs "DRX" -Konfiguration eines Gerätes, welches zu dem Geräte-Cluster gehört.

4. Verfahren nach einem der vorgehenden Ansprüche 1 bis 3, wobei die Nachfrage für eine Uplink-Synchronisation eines Gerätes in einem Netzwerk-Kommunikations-Leerlauf-Modus durch Detektieren einer Nachfrage für eine Netzwerk-Kommunikation wahrgenommen wird.

5. Verfahren nach einem der vorgehenden Ansprüche 1 bis 4, wobei die Regelung der Synchronisation mit einem Serving-Network-Node ausgeführt wird, durch Anfordern mindestens einer dedizierten Random-Access-Channel "RACH" -Präambel für ein Gerät im Netzwerk-Kommunikations-Modus oder eines Radio-Resource-Control-Verbindungsaufbaus für ein Gerät im Netzwerk-Kommunikations-Leerlauf-Modus, und/oder durch Anfordern oder Erhalten von mindestens einem zusätzlichen clusterweisen temporären Funknetz-Zellen-Identifikators "C-RNTI".

6. Verfahren nach Anspruch 1, weiter umfassend:
- Zuweisen von mindestens einem clusterweisen temporären Funknetz-Zellen-Identifikator (C-RNTI) an den Geräte-Cluster.

7. Verfahren nach Anspruch 6, wobei jeder clusterweise temporäre Funknetz-Zellen-Identifikator eine individuelle Timing-Advance-Information und/oder einen Laufzeit-Abgleichs-Timer aufweist.

8. Verfahren nach einem der vorgehenden Ansprüche, weiter umfassend:
- Anfordern einer Ressource für die Netzwerk-Kommunikation vom Master-Gerät des Geräte-Clusters, und
- Erhalten neuer Laufzeit-Informations-Parameter und/oder Validitäts-Timer, falls für die Netzwerk-Synchronisation für die Netzwerk-Kommunikation erforderlich.

9. Verfahren nach Anspruch 8, weiter umfassend:
- Ausführen eines nicht-konkurrierenden Random-Access-Channel-Vorgangs unter Verwendung von mindestens einer dedizierten Random-Access-Channel-Präambel.

10. Master-Gerät eines Gerät-zu-Gerät Clusters, welches sich mit einem Serving-Network-Node im Netzwerk-Kommunikations-Modus befindet, welches Master-Gerät eine Vorrichtung aufweist, welche Mittel umfasst, welche konfiguriert sind zur Durchführung des Verfahren nach einem der Ansprüche 1 bis 9.

11. Computer-Programm-Produkt umfassend Programm-Befehle zur Konfiguration eines Master-Geräts eines Gerät-zu-Gerät Clusters, um irgendeinen der Schritte des mit den Ansprüche 1 bis 9 beanspruchten Verfahrens auszuführen, falls das Computer-Programm ausgeführt wird.

## Revendications

1. Procédé comprenant :
au niveau d'un dispositif maître d'une grappe dispositif-à-dispositif (107), l'obtention (202) de paramètres d'information de chronométrage et de statuts de chronomètres de validité (102, 103) appartenant à la grappe dispositif-à-dispositif et, pour les besoins de la synchronisation réseau, se situant dans un mode de communication réseau avec un noeud de réseau desservant (108) ;
la surveillance d'un besoin de synchronisation de liaison montante mettant en oeuvre les paramètres d'information de chronométrage et/ou les statuts de chronomètres de validité, selon lequel la surveillance nécessite la surveillance de membres de la grappe dispositif-à-dispositif par le dispositif maître, et si le besoin de synchronisation réseau existe (206), faisant en sorte que le dispositif maître, commande la synchronisation de membres de la grappe en besoin de renouvellement de synchronisation réseau au noeud de réseau desservant, selon lequel :
les paramètres d'information de chronométrage sont des valeurs d'informations de chronométrage précoces (TAI) et/ou des identifiants temporaires de réseau cellulaire à radio-fréquence (C-RNTI) ;
les chronomètres de validité sont des chronomètres d'alignement de chronométrage (TAT) et les TAT sont liés à la durée de vie d'une valeur précoce de chronométrage de liaison montante (TA) ; et
le mode de communication réseau est un état connecté à une commande de ressource radio (RRC) ; et selon lequel
le besoin de synchronisation de liaison montante d'un dispositif en mode de communication réseau est calculé en calculant si le dispositif présente un paramètre d'information de chronométrage valide et/ou si le chronomètre de validité a expiré.

2. Procédé selon la revendication 1, comprenant en outre l'obtention d'un identifiant temporaire de réseau cellulaire à radio-fréquence par grappe (C-RNTI) pour la grappe de dispositifs.

3. Procédé selon la revendication 1 ou la revendication 2, comprenant en outre l'obtention d'une configuration à réception discontinue (DRX) de dispositifs appartenant à la grappe de dispositifs.

4. Procédé selon l'une quelconque des revendications précédentes 1 à 3, selon lequel le calcul du besoin de synchronisation de liaison montante d'un dispositif en mode de communication réseau au repos est effectué en détectant un besoin de communication réseau.

5. Procédé selon l'une quelconque des revendications précédentes 1 à 4, selon lequel la commande de la synchronisation au profit d'un noeud de réseau desservant est effectuée en sollicitant au moins un préambule de canal d'accès aléatoire dédié (RACH) pour un dispositif en mode de communication réseau, ou un établissement de connexion à commande de ressource radio-fréquence pour un dispositif en mode de communication réseau au repos, et/ou en sollicitant ou en obtenant au moins un identifiant temporaire additionnel de réseau cellulaire à radio-fréquence par grappe (C-RNTI) .

6. Procédé selon la revendication 1, comprenant en outre l'attribution d'au moins un identifiant temporaire de réseau cellulaire à radio-fréquence par grappe (C-RNTI) à la grappe de dispositifs.

7. Procédé selon la revendication 6, selon lequel chaque identifiant temporaire de réseau cellulaire à radio-fréquence par grappe présente des informations précoces individuelles de chronométrage et/ou un chronomètre d'alignement de chronométrage.

8. Procédé selon l'une quelconque des revendications précédentes, comprenant en outre :
la sollicitation d'une ressource pour de la communication réseau du dispositif maître de la grappe de dispositifs ; et
l'obtention d'un nouveau paramètre d'information de chronométrage et/ou d'un chronomètre de validité, si nécessaire pour la synchronisation de la communication réseau.

9. Procédé selon la revendication 8, comprenant en outre l'exécution d'un procédé à canal d'accès aléatoire non-contentieux en utilisant au moins préambule dédié à canal d'accès aléatoire.

10. Dispositif maître d'une grappe dispositif-à-dispositif en mode de communication réseau avec un noeud de réseau desservant, le dispositif maître comprenant un équipement comprenant des moyens configurés pour effectuer le procédé selon l'une quelconque des revendications 1 à 9.

11. Produit de programme d'ordinateur comprenant des instructions de programme configurant un dispositif maître d'une grappe dispositif-à-dispositif afin d'effectuer l'une quelconque des étapes du procédé selon l'une quelconque des revendications 1 à 9 lorsque le programme d'ordinateur est exécuté.
